# EUROPÄISCHE PATENTSCHRIFT

(11) **EP 3 524 422 B1**
(45) Veröffentlichungstag und Bekanntmachung des Hinweises auf die Patenterteilung: **24.06.2020**
(21) Anmeldenummer: 18156389.1
(22) Anmeldetag: 13.02.2018
(51) Int. Cl.: B32B 1/08, B32B 27/08, B32B 27/18, B32B 27/22, B32B 27/34, F16L 11/04

(54) **FLEXIBLE MEHRSCHICHT-DRUCKLUFTLEITUNG**
FLEXIBLE MULTILAYER COMPRESSED AIR CONDUIT
CONDUITE D'AIR COMPRIMÉ MULTICOUCHE FLEXIBLE

(43) Veröffentlichungstag der Anmeldung: 14.08.2019
(73) Patentinhaber: EMS-Patent AG, 7013 Domat/Ems (CH)
(72) Erfinder: STÖPPELMANN, Georg, 7402 Bonaduz (CH); STURZEL, André, 7206 Igis (CH); HOFFMANN, Michael, 7013 Domat/Ems (CH)
(74) Vertreter: Bremi, Tobias Hans

(56) Entgegenhaltungen:
- EP-A1- 1 452 307
- WO-A1-2011/136869
- US-A1- 2004 096 615

## Beschreibung

### TECHNISCHES GEBIET

Die vorliegende Erfindung betrifft eine Mehrschichtleitung aus thermoplastischem Material, insbesondere für Druckluft im Automobilbereich, ein Verfahren zur Herstellung einer derartigen Leitung und Verwendungen solcher Leitungen.

### STAND DER TECHNIK

Die Verwendung von Druckluftleitungen auf Basis von Schichtstrukturen aus Kunststoffen, insbesondere aus Polyamid, gehört bereits seit längerer Zeit zum Stand der Technik. Aufgrund der Anforderungen in Bezug auf Berstdruckfestigkeit, auch bei hoher Temperatur, sowie der geforderten mechanischen Eigenschaften (z.B. Schlagzähigkeit, Bruchdehnung) werden dabei bevorzugt Mehrschichtrohre verwendet, welche sich durch eine hohe thermische Belastbarkeit, eine hohe Längenstabilität sowie eine grosse Druck-Widerstandsfähigkeit bei unterschiedlichsten Temperaturen auszeichnen.

Die EP-A-2 842 736 beschreibt eine Druckluftbremsleitung, die eine Aussenschicht aus mindestens 50% PA11 oder PA12 aufweist und eine Innenschicht aus einer Formmasse, die zu mindestens 50% PA enthält, dessen Monomereinheiten im Mittel mindestens 8 C-Atome enthalten, wobei PA 11 und PA12 hier ausgeschlossen sind. Eine weitere innerste Schicht kann vorgesehen sein aus einer Formmasse, die zu mindestens 50% PA enthält, dessen Monomereinheiten im Mittel mindestens 8 C-Atome enthalten. Als Beispiele wurde der Rohraufbau von aussen nach innen PA12¦¦PA612¦¦PA12 hergestellt, und die als "hoop strength" bzw. hoop stress bezeichnete Vergleichsspannung gemessen. Eine weitere Druckluftleitung offenbart die EP-A-1 378 696. Hier ist die Zwischenschicht stets entweder eine Mischung aus einem Polyamid und einem Polyolefin oder auf Basis von Copolymeren mit Polyether-Blöcken und Polyamid-Blöcken. Innen- und Aussenschicht sind gleich ausgebildet und zwar aus Polyamid 11 oder Polyamid 12. Ebenfalls möglich sind Polyamid 6 und Polyamid 66 oder andere Systeme. Mischungen werden nicht vorgeschlagen. Konkrete Ausführungsbeispiele werden nicht hergestellt, sondern es gibt nur generische Aufzählungen, d.h. die Leistungsfähigkeit der vorgeschlagenen Strukturen lässt sich nicht nachvollziehen.

EP-A-2 409 830 beschreibt eine flexible Leitung aus Polyamid als Bremsleitung. Es werden generisch sehr unterschiedliche mehrschichtige Aufbauten beschrieben. Aussenschichten bestehen dabei immer aus einem einzigen Polyamid, und Innenschichten werden bei gewissen Aufbauten aus dem gleichen Material wie die Aussenschicht vorgeschlagen oder aus PA6 oder PA66, und bei anderen Aufbauten aus PA6, PA 66, PA610, sowie PA612. Mischungen werden nur im Zusammenhang mit Polyether-Polyamid Copolymeren beschrieben. Soweit weitere Zwischenschichten offenbart werden, bestehen diese aus EVOH, aus Propylen-Polymeren oder aus nicht weiter spezifizierten Polymeren.

EP-A-1 717 022 hat die Aufgabe, ein Mehrschichtrohr zum Transport von Dampf oder Flüssigkeiten zur Verfügung zu stellen. Im allgemeinsten Sinne wird eine Zweischichtleitung beansprucht aus einer einzigen zwingenden Schicht beispielsweise aus Polyamid 610 gegebenenfalls gemischt zusätzlich mit Polyamid 11, mit einer weiteren Schicht auf der Innen- oder Aussenseite. Diese zusätzliche Schicht besteht ausschliesslich aus einem Polyamid, PA11 oder PA12, gegebenenfalls mit zusätzlichen Additiven, andere Polyamide gibt es in dieser Schicht aber nicht. In den Beispielen werden Zweischichtleitungen gearbeitet, und soweit Dreischichtleitungen gearbeitet werden, haben diese stets auf der Innenseite und auf der Aussenseite eine Schicht aus Polyamid 11 und die Zwischenschicht besteht entweder aus Polyamid 610 oder aus einer Mischung aus Polyamid 610 und Polyamid 11.

Die WO-A-2011/136869 beschreibt einschichtige und mehrschichtige Leitungen aus diversen Polyamiden. Die Anforderungen an Berstdruck werden hier unter anderen durch Faser verstärkte Schichten erfüllt. Dreischichtige Aufbauten werden hier nur mit einer solchen Schicht umfassend z.B. Faser vorgestellt. Konkrete Ausführungsbeispiele werden nicht hergestellt, sondern es werden nur generische Aufzählungen gegeben, d.h. die Leistungsfähigkeit der vorgeschlagenen Strukturen lässt sich nicht nachvollziehen.

Aus der US-A-2004/096615 sind Mehrschichtleitungen bekannt, die einen Aufbau mit einer Schicht aus PA6 und einer Schicht aus dem Lactam 6 und Lactam 12 basierten Copolymer PA6/12 aufweist. Je nach Lactam der in diesem Dokument beanspruchten Schicht wird entweder ein Verträglichkeitsvermittler in der Formmasse oder eine direkt angrenzende Schicht enthaltend entweder Lactam 6 oder Lactam 12 verwendet.

Es gibt auch weitere Aufbauten, die Polyamide mit einem zweiten Nicht-Polyamid Thermoplasten z.B. Polyester (konkret Polybutylenterephthalat) kombinieren. DE-A-4112662 beschreibt einen Aufbau PA12¦¦PA12+Polyester¦¦PA12.

### DARSTELLUNG DER ERFINDUNG

Es ist unter anderem Aufgabe der Erfindung, eine mehrschichtige Druckluftleitung mit sehr gutem Berstdruck sowie geringer Extraktion in Erfüllung der entsprechenden Normen zur Verfügung zu stellen. Zudem ist es eine Aufgabe der Erfindung, eine mechanisch-robuste Leitung bereit zu stellen. Die Aufgaben der Erfindungen werden durch den im Anspruch 1 definierten Aufbau gelöst.

Konkret betrifft die vorliegende Erfindung eine Kunststoffleitung gemäss Anspruch 1, d.h. bestehend aus drei Schichten:
einer an den Innenraum angrenzenden Innenschicht,
einer an die Innenschicht unmittelbar grenzenden Mittelschicht und
einer an die Mittelschicht unmittelbar grenzenden Aussenschicht.

Die Mittelschicht ist auf Basis von PA612 und/oder PA616 ausgebildet oder besteht im Wesentlichen daraus.

Nach der Erfindung ist die Innenschicht auf Basis einer Mischung aus PA12 und PA612 ausgebildet ist oder besteht im Wesentlichen daraus.

Nach der Erfindung ist weiter die Aussenschicht auf Basis einer Mischung aus PA12 und PA612 ausgebildet oder besteht im Wesentlichen daraus.

Nach der Erfindung sind also sowohl die Innenschicht als auch die Aussenschicht auf Basis einer Mischung aus PA12 und PA612 ausgebildet oder bestehen im Wesentlichen daraus, wobei jeweils der Anteil an PA612 im Bereich von 20-40 Gewichtsprozent der gesamten Formmasse der jeweiligen Schicht ausmacht, vorzugsweise liegt der Anteil im Bereich von 25-35 Gewichtsprozent.

Bevorzugt ist die Mittelschicht nur auf Basis von PA612 ausgebildet ohne weitere Polyamid-Bestandteile.

Wenn hier davon gesprochen wird, dass eine bestimmte Schicht "auf Basis von Polyamid xx" ausgebildet ist, so ist vorzugsweise darunter zu verstehen, dass die Formmasse neben dem genannten Polyamid xx keine weiteren von Polyamid xx verschiedenen Polyamid-Bestandteile mehr enthält.

Die Formmasse der **Innenschicht,** der **Aussenschicht,** vorzugsweise von Innenschicht und Aussenschicht, besteht vorzugsweise aus folgenden Bestandteilen:
(A) 78-96 Gewichtsprozent, vorzugsweise 85-95 Gewichtsprozent, einer Mischung aus PA12 und PA612;
(B) 2-20 Gewichtsprozent, vorzugsweise 2-8 Gewichtsprozent, insbesondere vorzugsweise 3-6 Gewichtsprozent Schlagzähmodifikator;
(C) 2-15 Gewichtsprozent, vorzugsweise 4-10 Gewichtsprozent, insbesondere vorzugsweise 5-7 Gewichtsprozent Weichmacher;
(D) 0-5 Gewichtsprozent Additive verschieden von (B) und (C),
wobei die Summe von (A)-(D) 100 Gewichtsprozent der gesamten jeweiligen Schicht bildenden Formmasse ausmacht.

Vorzugsweise sind die Formmassen von Innenschicht und Aussenschicht identisch oder quasi-identisch.

Die **Komponente (A)** setzt sich dabei bevorzugt wie folgt zusammen:
(A1) 60-72 Gewichtsprozent Polyamid PA12;
(A2) 28-40 Gewichtsprozent Polyamid PA612;
wobei die Summe (A1)-(A2) 100 Gewichtsprozent der Komponente (A) ausmacht.

Alternativ oder zusätzlich gilt zudem, dass die Komponente (A) aus einer Mischung aus Polyamid PA12 und Polyamid PA612 besteht, wobei das Verhältnis im Bereich von 1:1-5:1, insbesondere bevorzugt im Bereich 1.2:1-4:1 liegt.

Die Formmasse der **Mittelschicht** besteht bevorzugtermassen aus folgenden Bestandteilen:
(a) 60 - 92 Gewichtsprozent, vorzugsweise 70 - 90 oder 72 - 90 Gewichtsprozent, wenigstens eines Polyamids ausgewählt aus der folgenden Gruppe: PA612, PA616, wobei Polyamid 612 allein bevorzugt ist;
(b) 5 - 25 Gewichtsprozent, vorzugsweise 10 - 20 Gewichtsprozent, insbesondere vorzugsweise 12-18 Gewichtsprozent Schlagzähmodifikator;
(c) 3 - 18 Gewichtsprozent, vorzugsweise 4 - 14 Gewichtsprozent, insbesondere vorzugsweise 7 - 11 Gewichtsprozent Weichmacher;
(d) 0 - 5 Gewichtsprozent Additive verschieden von (b) und (c),
wobei die Summe von (a)-(d) 100 Gewichtsprozent ausmacht.

Das Polyamid respektive die Polyamide wenigstens einer Schicht, vorzugsweise die Polyamide aller Schichten, weisen vorzugsweise eine relative Lösungsviskosität, gemessen in m-Kresol nach ISO 307 bei einer Temperatur von 20 °C im Bereich von 2.0-2.4 vorzugsweise von 2.05-2.35.

Weiterhin vorzugsweise verfügen sie über einen Schmelzpunkt im Bereich von 160 - 240°C oder 175-220°C, vorzugsweise wenn ausgewählt als Polyamid PA12 über einen Schmelzpunkt im Bereich von 175-180 °C und wenn ausgewählt als Polyamid PA 612 über einen Schmelzpunkt im Bereich von 210-215 °C.

Der Anteil **Additive** (D,d) liegt vorzugsweise im Bereich von 0.1-3 Gewichtsprozent, vorzugsweise im Bereich von 0.5-1 Gewichtsprozent.

Bevorzugtermassen sind die Additive (D,d) ausgewählt aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Leitfähigkeitsadditive, Gleitmittel oder Mischungen davon.

Als Stabilisator wird die Kombination Kupfer(I)iodid und Kaliumiodid/Calciumstearat bevorzugt. In einer anderen Ausführungsform ist die Verwendung eines organischen Stabilisators bevorzugt. In einer weiteren bevorzugten Ausführungsform umfasst die Innenschicht eine Kupferstabilisierung und die Aussenschicht eine organische Stabilisierung.

Wenigstens eine der Schichten, vorzugsweise alle Schichten, verfügen bevorzugtermassen im Rahmen von Additiven über eine Kupferstabilisierung, vorzugsweise auf Basis von Cul, in einem Cul Anteil im Bereich von 0.01-0.10 Gewichtsprozent, oder in einem Anteil von 0.03-0.07 Gewichtsprozent auf die gesamte Formmasse der jeweiligen Schicht.

Eine weitere bevorzugte Ausführungsform ist dadurch gekennzeichnet, dass der **Schlagzähmodifikator** (B,b) ein mit einer Säure modifiziertes Ethylen-α-Olefin-Copolymeres ist, insbesondere bevorzugt ein mit einem Säureanhydrid, insbesondere mit Maleinsäureanhydrid, gepfropftes Ethylen/a-Olefin-Copolymeres, insbesondere derart modifiziertes respektive gepfropftes Ethylen/Butylen, Ethylen/Propylen, oder Ethylenpropylen/Ethylenbutylen Copolymeres sowie deren Mischungen.

Weiterhin wird bevorzugt, dass der **Weichmacher** (C,c) ausgewählt ist als Hydroxybenzoesäureester- und/oder Sulfonamid-basierter Weichmacher, bevorzugt der Klasse der N-substituierten Sulfonamid-Weichmacher, insbesondere bevorzugt als BBSA.

Als Hydroxybenzoesäureester-basierter Weichmacher kommen z.B. Systeme wie folgt in Frage: Hexyloxyethoxyethyl p-hydroxybenzoat; Hexyloxypropoxypropyl p-hydroxybenzoat; Hexyloxybutoxybutyl p-hydroxybenzoat; Octyloxyethoxyethyl p-hydroxybenzoat; Octyloxypropoxypropyl p-hydroxybenzoat; Octyloxybutoxybutyl p-hydroxybenzoat; 2'-Ethylhexyloxyethoxyethyl p-hydroxybenzoat; 2'-Ethylhexyloxypropoxypropyl p-hydroxybenzoat; 2'-Ethylhexyloxybutoxybutyl p-hydroxybenzoat; Decyloxyethoxyethyl p-hydroxybenzoat; Decyloxypropoxypropyl p-hydroxybenzoat; Decyloxybutoxybutyl p-hydroxybenzoat, oder Mischungen davon.

Weiter betrifft die vorliegende Erfindung ein Verfahren zur Herstellung einer Kunststoffleitung wie oben dargelegt, vorzugsweise dadurch gekennzeichnet, dass die 3 Schichten in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

Zu guter letzt betrifft die vorliegende Erfindung die Verwendung einer solchen Kunststoffleitung als Druckleitung, insbesondere als Druckluftleitung, bevorzugt im Automobilbereich, insbesondere bevorzugt als Druckluft-Bremsleitung im Automobilbereich, bevorzugt unter Bedingungen mit einem Innendruck von bis zu 100 bar, insbesondere bevorzugt von bis zu 90 bar, und besonders bevorzugt im Bereich von 80-100 bar.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

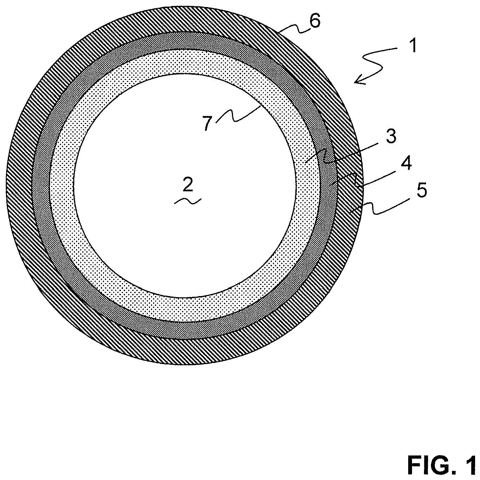

- Fig. 1: eine Druckluftleitung in einer Schnittdarstellung senkrecht zur Verlaufsrichtung.

### BESCHREIBUNG BEVORZUGTER AUSFÜHRUNGSFORMEN

Figur 1 zeigt eine beispielhafte Druckluftleitung 1 nach der Erfindung in einem Schnitt quer zur Hauptverlaufsrichtung.

Die Querschnittsfläche kann dabei über die Hauptverlaufsrichtung konstant sein, d. h. das Rohr kann eine im Wesentlichen hohlzylindrische Form haben.

Die Querschnittsfläche kann aber auch über die Hauptverlaufsrichtung variieren, beispielsweise in Form eines Wellrohres.

Ein Innenraum 2 wird von der Rohrwand umschlossen. Auf den Innenraum 2 folgt zunächst radial nach aussen eine Innenschicht 3, welche mit der Innenfläche 7 an den Innenraum 2 grenzt und diesen begrenzt. Diese Innenschicht ist auf Basis einer Mischung aus Polyamid 12 und Polyamid 612 ausgebildet ohne weitere andere Polyamid-Bestandteile.

Direkt angrenzend an die Innenschicht 3 ohne dazwischenliegende Haftvermittlerschicht folgt eine Mittelschicht 4, diese ist auf Basis von Polyamid 612 ausgebildet ohne weitere andere Polyamid-Bestandteile.

Direkt angrenzend nach aussen an diese Mittelschicht 4 und wiederum ohne dazwischenliegende Haftvermittlerschicht folgt die Aussenschicht 5. Die Aussenschicht 5 ist auf Basis einer Mischung aus Polyamid 12 und Polyamid 612 ausgebildet ohne weitere andere Polyamid-Bestandteile. Die Aussenfläche 6 der Aussenschicht 5 begrenzt die Leitung nach aussen.

### Eingesetzte Ausgangsmaterialien:

| | |
|---|---|
| PA12 | Hochviskoses Polyamid 12 mit Tₘ = 178 °C gemessen gemäss ISO 3146 und ηᵣₑₗ = 2.25, gemessen als 0.5 g Polyamid gelöst in 100 mL m-Kresol. |
| PA612 | Polyamid 612 mit Tₘ = 215 °C gemessen gemäss ISO 3146 und ηᵣₑₗ = 2.15, gemessen als 0.5 g Polyamid gelöst in 100 mL m-Kresol. |
| WM | Weichmacher, N-Butylbenzolsulfonamid (BBSA), erhältlich von der Firma Lanxess unter dem Markennamen Uniplex 214. |
| SZM | Tafmer MC201 erhältlich von der Firma Mitsui Chemicals, MVR (gemessen bei 230 °C/2.16 kg) von 1.2 g/10 min (ASTM D1238) und mit T_{g} gemessen gemäss ISO 11357-2 (2013) von -60 °C. Tafmer MC-201 ist ein Schlagzähmodifikator in Form einer Mischung aus Ethylen-propylenand Ethylen-butylen Copolymeren gepfropft mit Maleinsäureanhydrid, namentlich g-MAH (-0.6%) blend aus 67% EP Copolymer (20 mol % Propylene) + 33% EB Copolymer (15 mol % 1-Butene). |
| Stab | Kupfer(I)iodid, Calciumstearat, Kaliumiodid, in Verhältnis 8:1:49. |
| SMB | Euthylen Schwarz, Russ-basiertes (40%) Farbmasterbatch auf Basis PE, erhältlich von BASF (Ludwigshafen, DE). |

**Tabelle 1: Eigenschaften der in Beispiel 1 verwendeten Formmassen (trocken)**

| Eigenschaften | Einheit | Innen- und Aussenschicht | Mittelschicht |
|---|---|---|---|
| E-Modul | MPa | 1000 | 700 |
| Bruchspannung | MPa | 45 | 50 |
| Bruchdehnung | % | 200 | 200 |
| Schmelzpunkt | °C | 173 | 210 |

### Herstellung der Prüfkörper:

Rohre wurden co-extrudiert bei Massen-Temperaturen zwischen 240 und 260 °C unter Vakuum von -140 mbar und einer Extrusionsgeschwindigkeit von 16 m/min.

Als Prüfkörper wurden Rohre mit einem Aussendurchmesser von 12 mm, der Wandstärke von 1.5 mm eingesetzt.

Die Prüfung wurde jeweils fünfmal an Probekörpern mit Aussendurchmesser 12 mm durchgeführt.

Die Länge des Rohres wurde je nach Prüfungsanforderungen angepasst.

### Aufbau der Rohre für die Messungen:

Die drei Schichten sind aufgebaut als: Aussenschicht 0.15 mm; Mittelschicht 1.2 mm; Innenschicht 0.15 mm, mit einer Gesamtwanddicke von 1.5 mm.

**Tabelle 2: Zusammensetzungen der Prüfrohre**

| | | **B1** | | **VB1** | | **VB2** | | **VB3** | |
|---|---|---|---|---|---|---|---|---|---|
| | | A/I | M | A/I | M | A/I | M | A/I | M |
| PA12 | Gew.-% | 60 | | 90 | | 45 | | 75 | |
| PA612 | Gew.-% | 30 | 75 | 0 | 75 | 45 | 75 | 15 | 75 |
| WM | Gew.-% | 6 | 9 | 6 | 9 | 6 | 9 | 6 | 9 |
| SZM | Gew.-% | 3 | 15 | 3 | 15 | 3 | 15 | 3 | 15 |
| Stab | Gew.-% | 0.35 | 0.35 | 0.35 | 0.35 | 0.35 | 0.35 | 0.35 | 0.35 |
| SMB | Gew.-% | 0.65 | 0.65 | 0.65 | 0.65 | 0.65 | 0.65 | 0.65 | 0.65 |
| | | | | | | | | | |
| %PA 612 | Gew.-% | 33.3 | | 0.0 | | 50.0 | | 16.7 | |
| %PA12 | Gew.-% | 66.7 | | 100.0 | | 50.0 | | 83.3 | |
| Verhältnis PA12:PA612 | | 2.0 | | 0.0 | | 1.0 | | 5.0 | |

| | | | | | | | | | |
|---|---|---|---|---|---|---|---|---|---|
| M: Mittelschicht; A/I: Aussen und Innenschicht | | | | | | | | | |

### An den Materialien und den beschriebenen Rohraufbauten wurden folgende Tests durchgeführt:

Soweit nicht anders angegeben oder durch die Norm vorgegeben wurden die Messungen bei 50% relative Feuchtigkeit durchgeführt.

***Extrahierbarer Anteil*:** Prüfung gemäss DIN 73378 (1996), Kapitel 6.4.4: Die Prüfung erfolgt nach DIN 53738 über eine Extraktionszeit von (18 ± 1) h beim Verfahren A. Die Zerkleinerung der Rohrproben erfolgt mit einem Zerkleinerungsgerät. Zur Extraktion wird eine Granulatfraktion benutzt, die durch die Drahtsiebböden 500 µm und 3,15 mm nach DIN ISO 3310-1 begrenzt wird. Als Extraktionsflüssigkeit wird Ethanol benutzt. ***Bruchspannung, Bruchdehnung (50 mm*/*min) und E-Modul (1 mm*/*min) gemessen an den Formmassen:*** Wurden nach ISO 527 (2012) gemessen mit einer Zuggeschwindigkeit von 1 mm/min an einem ISO 3167-konformen Zugstab. ***Pendelschlag:*** Prüfung gemäss DIN 73378 (1996) Kapitel 6.4.6. ***Vergleichsspannung:*** Der Berstdruck der hergestellten Formkörper wird in Anlehnung an DIN 73378 (1996) an Hohlkörpern mit Dimensionen Länge 15 cm und Aussendurchmesser 12 mm, bzw. Wanddicke 1.5 mm gemessen. Die Vergleichsspannung als ein von den Rohrmassen unabhängiger Werkstoffkennwert, wird aus dem bei einer Innendruckbeanspruchung ermittelten Berstdruck des Rohres unter Verwendung von Gleichung (1) in DIN 73378 (1996) Kapitel 3.2 errechnet.

***Relative Viskosität:*** DIN EN ISO 307 (2007), in 0,5 Gew.-%-iger m-Kresollösung bei einer Temperatur von 20 °C.

***Thermisches Verhalten*** (Schmelzpunkt Tₘ, Schmelzenthalpie und Glasumwandlungs-temperatur (T_{g}): ISO-Norm 11357-1 (2016), -2 (2013) und -3 (2011), Granulat, die Differential Scanning Calorimetry (DSC) wird mit Aufheizrate von 20 °C/min durchgeführt.

**Tabelle 3: Eigenschaften**

| | | | **B1** | **VB1** | **VB2** | **VB3** |
|---|---|---|---|---|---|---|
| Extrahierbarer Anteil | | % | 8.8 | 9.7 | 9.6 | 9.2 |
| | | | | | | |
| Vergleichsspannung | 23 °C | MPa | 32 | 27 | 28 | 29 |
| Vergleichsspannung | 80 °C | MPa | 16 | 14 | 15 | 14 |
| Vergleichsspannung | 100 °C | MPa | 14 | 12 | 12 | 11 |
| Vergleichsspannung | 130 °C | MPa | 10 | 9 | 9 | 8 |
| | | | | | | |
| Pendelschlag | -40 ± 2 °C | | o.B. | o.B. | o.B. | o.B. |

| | | | | | | |
|---|---|---|---|---|---|---|
| o.B = ohne Bruch | | | | | | |

Die vorliegenden Resultate zeigen eine überraschende Wirkung durch die Zugabe von PA 612 in die Formmasse für die Innen- und Aussenschicht der Druckluftbremsleitung. Neben ausreichendem Pendelschlag beobachtet man unerwarteter Weise eine Verbesserung in der Vergleichsspannung und eine Abnahme in der Extraktion. Es kann also anhand des experimentellen Nachweises gezeigt werden, dass eine Mischung aus PA 612 und PA 12 optimierte mechanische Eigenschaften liefert neben einer Verbesserung in der Menge extrahierbarer Anteile der Leitung.

### BEZUGSZEICHENLISTE

- 1: Druckluftleitung
- 2: Innenraum
- 3: Innenschicht
- 4: Mittelschicht
- 5: Aussenschicht
- 6: Aussenfläche
- 7: Innenfläche

## Patentansprüche

1. Kunststoffleitung bestehend aus drei Schichten, einer an den Innenraum (2) angrenzenden Innenschicht (3), einer an die Innenschicht (3) unmittelbar grenzenden Mittelschicht (4) und einer an die Mittelschicht (4) unmittelbar grenzenden Aussenschicht (5), wobei die Innenschicht (3) auf Basis einer Mischung aus PA12 und PA612 ausgebildet ist oder im Wesentlichen daraus besteht, wobei der Anteil an PA612 im Bereich von 20-40 Gewichtsprozent der gesamten Formmasse der Innenschicht (3) liegt,
die Mittelschicht (4) auf Basis von PA612 und/oder PA616 ausgebildet ist oder im Wesentlichen daraus besteht,
die Aussenschicht (5) auf Basis einer Mischung aus PA12 und PA612 ausgebildet ist oder im Wesentlichen daraus besteht, wobei der Anteil an PA612 im Bereich von 20-40 Gewichtsprozent der gesamten Formmasse der Aussenschicht (5) liegt.

2. Kunststoffleitung nach Anspruch 1, **dadurch gekennzeichnet, dass** der Anteil an PA612 in der Innenschicht (3) im Bereich von 25-35 Gewichtsprozent der gesamten Formmasse der Innenschicht (3) liegt.

3. Kunststoffleitung nach einem der vorhergehenden Ansprüche, **dadurch gekennzeichnet, dass** der Anteil an PA612 in der Aussenschicht (5) im Bereich von 25-35 Gewichtsprozent der gesamten Formmasse der Aussenschicht (5) liegt.

4. Kunststoffleitung nach einem der vorhergehenden Ansprüche, **dadurch gekennzeichnet, dass** sowohl bei der Innenschicht (3) als auch bei der Aussenschicht (5) jeweils der Anteil an PA612 im Bereich von 25-35 Gewichtsprozent der gesamten Formmasse der jeweiligen Schicht (3, 5) liegt

5. Kunststoffleitung nach einem der vorhergehenden Ansprüche, **dadurch gekennzeichnet, dass** die Formmasse der Innenschicht (3) und/oder der Aussenschicht (5), vorzugsweise beider Schichten (3,5), aus folgenden Bestandteilen besteht:
(A) 78-96 Gewichtsprozent, vorzugsweise 85-95 Gewichtsprozent, der genannten Mischung auf Basis von PA12 und PA612;
(B) 2-20 Gewichtsprozent, vorzugsweise 2-8 Gewichtsprozent, insbesondere vorzugsweise 3-6 Gewichtsprozent Schlagzähmodifikator;
(C) 2-15 Gewichtsprozent, vorzugsweise 4-10 Gewichtsprozent, insbesondere vorzugsweise 5-7 Gewichtsprozent Weichmacher;
(D) 0-5 Gewichtsprozent Additive verschieden von (B) und (C),
wobei die Summe von (A)-(D) 100 Gewichtsprozent ausmacht.

6. Kunststoffleitung nach Anspruch 5, **dadurch gekennzeichnet, dass** sich die Komponente (A) wie folgt zusammensetzt:
(A1) 50-90 Gewichtsprozent, vorzugsweise 60-72 Gewichtsprozent Polyamid PA12; (A2) 10-50 Gewichtsprozent, vorzugsweise 28-40 Gewichtsprozent Polyamid PA612;
wobei die Summe (A1)-(A2) 100 Gewichtsprozent der Komponente (A) ausmacht, und/oder dass die Komponente (A) aus einer Mischung aus Polyamid PA12 und Polyamid PA612 besteht, wobei das Verhältnis im Bereich von 1:1-5:1, insbesondere bevorzugt im Bereich 1.2:1-4:1 liegt.

7. Kunststoffleitung nach einem der vorhergehenden Ansprüche, **dadurch gekennzeichnet, dass** die Formmasse der Mittelschicht (4) aus folgenden Bestandteilen besteht:
(a) 60-92 Gewichtsprozent, vorzugsweise 70 - 90 oder 72-90 Gewichtsprozent, eines Polyamids ausgewählt aus der folgenden Gruppe: PA612, PA616;
(b) 5-25 Gewichtsprozent, vorzugsweise 10-20 Gewichtsprozent, insbesondere vorzugsweise 12-18 Gewichtsprozent Schlagzähmodifikator;
(c) 3-18 Gewichtsprozent, vorzugsweise 4-14 Gewichtsprozent, insbesondere vorzugsweise 7-11 Gewichtsprozent Weichmacher;
(d) 0-5 Gewichtsprozent Additive verschieden von (b) und (c),
wobei die Summe von (a)-(d) 100 Gewichtsprozent ausmacht.

8. Kunststoffleitung nach einem der Ansprüche 5 -7, **dadurch gekennzeichnet, dass** der Anteil Additive (D,d) im Bereich von 0.1-3 Gewichtsprozent, vorzugsweise im Bereich von 0.5-1 Gewichtsprozent liegt,
und/oder dass Additive (D,d) ausgewählt sind aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Leitfähigkeitsadditive, Gleitmittel oder Mischungen davon.

9. Kunststoffleitung nach einem der vorhergehenden Ansprüche 5-8, **dadurch gekennzeichnet, dass** der Schlagzähmodifikator (B,b) ein mit einer Säure modifiziertes Ethylen-α-Olefin-Copolymeres ist, insbesondere bevorzugt ein mit einem Säureanhydrid, insbesondere mit Maleinsäureanhydrid, gepfropftes Ethylen/a -Olefin-Copolymeres, insbesondere derart modifiziertes respektive gepfropftes Ethylen/Butylen, Ethylen/Propylen, oder Ethylenpropylen/Ethylenbutylen Copolymeres sowie deren Mischungen.

10. Kunststoffleitung nach einem der vorhergehenden Ansprüche 5-9, **dadurch gekennzeichnet, dass** der Weichmacher (C,c) ausgewählt ist als Hydroxybenzoesäureester- und/oder Sulfonamid-basierter Weichmacher, bevorzugt der Klasse der N-substituierten Sulfonamid-Weichmacher, insbesondere bevorzugt als BBSA.

11. Kunststoffleitung nach einem der vorhergehenden Ansprüche, **dadurch gekennzeichnet, dass** wenigstens eine der Schichten (3-5), vorzugsweise alle Schichten, im Rahmen von Additiven (D,d) eine Kupferstabilisierung aufweisen, vorzugsweise auf Basis von Cul, in einem Cul Anteil im Bereich von 0.01-0.10 Gewichtsprozent, oder in einem Anteil von 0.03-0.07 Gewichtsprozent auf die gesamte Formmasse der jeweiligen Schicht.

12. Kunststoffleitung nach einem der vorhergehenden Ansprüche, **dadurch gekennzeichnet, dass** das Polyamid respektive die Polyamide wenigstens einer Schicht, vorzugsweise die Polyamid aller Schichten (3-5) eine relative Lösungsviskosität, gemessen in m-Kresol nach ISO 307 (2007) bei einer Temperatur von 20 °C im Bereich von 2.0-2.4 vorzugsweise von 2.05-2.35, aufweisen.

13. Kunststoffleitung nach einem der vorhergehenden Ansprüche, **dadurch gekennzeichnet, dass** das Polyamid respektive die Polyamide wenigstens einer Schicht einen Schmelzpunkt im Bereich von 160 - 240°C oder 175-220°C, vorzugsweise wenn ausgewählt als Polyamid PA12 einen Schmelzpunkt im Bereich von 175-180 °C und wenn ausgewählt als Polyamid PA 612 einen Schmelzpunkt im Bereich von 210-215 °C, aufweist.

14. Verfahren zur Herstellung einer Kunststoffleitung nach einem der vorhergehenden Ansprüche, **dadurch gekennzeichnet, dass** die 3 Schichten in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

15. Verwendung einer Kunststoffleitung nach einem der vorhergehenden Ansprüche als Druckleitung, insbesondere als Druckluftleitung, bevorzugt im Automobilbereich, insbesondere bevorzugt als Druckluft-Bremsleitung im Automobilbereich, bevorzugt unter Bedingungen mit einem Innendruck von bis zu 100 bar, insbesondere bevorzugt von bis zu 90 bar, und besonders bevorzugt im Bereich von 80 - 100 bar.

## Claims

1. Plastic tube consisting of three layers, an inner layer (3) adjoining the interior (2), a middle layer (4) directly adjoining the inner layer (3) and an outer layer (5) directly adjoining the middle layer (4), wherein
the inner layer (3) is based on or essentially consists of a mixture of PA12 and PA612, the proportion of PA612 being in the range of 20-40% by weight of the total moulding compound of the inner layer (3),
the middle layer (4) is formed on the basis of PA612 and/or PA616 or essentially consists thereof
the outer layer (5) is formed on the basis of a mixture of PA12 and PA612 or essentially consists thereof, the proportion of PA612 being in the range of 20-40% by weight of the total moulding compound of the outer layer (5).

2. Plastic tube according to claim 1, **characterized in that** the proportion of PA612 in the inner layer (3) is in the range of 25-35% by weight of the total moulding compound of the inner layer (3).

3. Plastic tube according to one of the preceding claims, **characterized in that** the proportion of PA612 in the outer layer (5) is in the range of 25-35% by weight of the total moulding compound of the outer layer (5).

4. Plastic tube according to one of the preceding claims, **characterised in that** both in the inner layer (3) and in the outer layer (5) the proportion of PA612 in each case lies in the range of 25-35% by weight of the total moulding compound of the respective layer (3, 5).

5. Plastic tubeaccording to one of the preceding claims, **characterised in that** the moulding compound of the inner layer (3) and/or the outer layer (5), preferably both layers (3, 5), consists of the following components:
(A) 78-96 percent by weight, preferably 85-95 percent by weight, of said mixture based on PA12 and PA612;
(B) 2-20% by weight, preferably 2-8% by weight, preferably 3-6% by weight of impact modifier;
(C) 2-15% by weight, preferably 4-10% by weight, in particular preferably 5-7% by weight plasticizer;
(D) 0-5 percent by weight of additives different from (B) and (C),
wherein the sum of (A)-(D) is 100% by weight.

6. Plastic tube according to claim 5, **characterized in that** component (A) is composed as follows:
(A1) 50-90% by weight, preferably 60-72% by weight polyamide PA12;
(A2) 10-50% by weight, preferably 28-40% by weight polyamide PA612;
wherein the sum (A1)-(A2) is 100% by weight of component (A),
and/or that component (A) consists of a mixture of polyamide PA12 and polyamide PA612,
the ratio being in the range of 1:1-5:1, particularly preferably in the range of 1.2:1-4:1.

7. Plastic tube according to one of the preceding claims, **characterised in that** the moulding compound of the middle layer (4) consists of the following components:
(a) 60-92 weight percent, preferably 70-90 or 72-90 weight percent, of a polyamide selected from the following group: PA612, PA616;
(b) 5-25%, preferably 10-20%, preferably 12-18% by weight of impact modifier;
(c) 3-18% by weight, preferably 4-14% by weight, in particular preferably 7-11% by weight plasticizer;
(d) 0-5 percent by weight of additives other than (b) and (c),
wherein the sum of (a)-(d) is 100% by weight.

8. Plastic tube according to one of claims 5 - 7, **characterized in that** the proportion of additives (D,d) is in the range of 0.1-3 percent by weight, preferably in the range of 0.5-1 percent by weight,
and/or **in that** additives (D,d) are selected from at least one additive from the following group: antioxidants, processing aids, UV stabilizers, heat stabilizers, pigments, masterbatch carriers, conductivity additives, lubricants or mixtures thereof.

9. Plastic tube according to one of the preceding claims 5-8, **characterized in that** the impact modifier (B,b) is an ethylene-a olefin copolymer modified with an acid, in particular preferably an ethylene/α-olefin copolymer grafted with an acid anhydride, in particular with maleic anhydride, in particular ethylene/butylene, ethylene/propylene, or ethylenepropylene/ethylenebutylene copolymer modified or grafted in this way, as well as mixtures thereof.

10. Plastic tube according to one of the preceding claims 5-9, **characterized in that** the plasticizer (C,c) is selected as hydroxybenzoic acid ester and/or sulfonamide-based plasticizer, preferably of the class of N-substituted sulfonamide plasticizers, in particular preferably as BBSA.

11. Plastic tube according to one of the preceding claims, **characterized in that** at least one of the layers (3-5), preferably all layers, have a copper stabilization, preferably based on Cul, within the scope of additives (D,d), in a CuI proportion in the range of 0.01-0.10 % by weight, or in a proportion of 0.03-0.07 % by weight on the total moulding compound of the respective layer.

12. Plastic tube according to one of the preceding claims, **characterized in that** the polyamide or polyamides of at least one layer, preferably the polyamide of all layers (3-5) have a relative solution viscosity, measured in m-cresol according to ISO 307 (2007) at a temperature of 20°C in the range of 2.0-2.4, preferably 2.05-2.35.

13. Plastic tube according to one of the preceding claims, **characterized in that** the polyamide or polyamides of at least one layer have a melting point in the range 160-240°C or 175-220°C, preferably when selected as polyamide PA12 a melting point in the range 175-180°C and when selected as polyamide PA 612 a melting point in the range 210-215°C.

14. Method for producing a plastic tube according to one of the preceding claims, **characterized in that** the three layers are formed into a hollow body, in particular preferably into a pipe or a line or a container, in a continuous and/or discontinuous process, preferably in an extrusion blow moulding, a tandem extrusion, a sheathing process or a (co)extrusion process.

15. Use of a plastic tube according to one of the preceding claims as a pressure line, in particular as a compressed air line, preferably in the automotive sector, in particular preferably as a compressed air brake line in the automotive sector, preferably under conditions with an internal pressure of up to 100 bar, in particular preferably of up to 90 bar, and particularly preferably in the range 80 - 100 bar.

## Revendications

1. Tuyau en matière plastique constitué de trois couches, une couche intérieure (3) adjacente à l'intérieur (2), une couche intermédiaire (4) directement adjacente à la couche intérieure (3) et une couche extérieure (5) directement adjacente à la couche intermédiaire (4), **caractérisé en ce que**
la couche intérieure (3) est à base ou essentiellement constituée d'un mélange de PA12 et de PA612, la proportion de PA612 étant comprise entre 20 et 40 % en poids de la masse de moulage totale de la couche intérieure (3),
la couche intermédiaire (4) est formée sur la base de PA612 et/ou PA616 ou est essentiellement constituée de ceux-ci
la couche extérieure (5) est formée sur la base d'un mélange de PA12 et de PA612 ou en est essentiellement constituée, la proportion de PA612 étant comprise entre 20 et 40 % en poids de la masse de moulage totale de la couche extérieure (5).

2. Tuyau en matière plastique selon la revendication 1, **caractérisée en ce que** la proportion de PA612 dans la couche interne (3) est comprise entre 25 et 35 % en poids de la masse de moulage totale de la couche interne (3).

3. Tuyau en matière plastique selon l'une des revendications précédentes, **caractérisée en ce que** la proportion de PA612 dans la couche extérieure (5) est comprise entre 25 et 35 % en poids de la masse de moulage totale de la couche extérieure (5).

4. Tuyau en matière plastique selon l'une des revendications précédentes, **caractérisé en ce que** tant dans la couche intérieure (3) que dans la couche extérieure (5), la proportion de PA612 se situe dans chaque cas dans la plage de 25-35% en poids de la masse de moulage totale de la couche respective (3, 5).

5. Tuyau en matière plastique selon l'une des revendications précédentes, **caractérisé en ce que** la masse de moulage de la couche intérieure (3) et/ou de la couche extérieure (5), de préférence des deux couches (3, 5), est constituée des composants suivants
(A) 78 à 96 % en poids, de préférence 85 à 95 % en poids, dudit mélange à base de PA12 et de PA612 ;
(B) 2-20 % en poids, de préférence 2-8 % en poids, de préférence 3-6 % en poids de modificateur d'impact ;
(C) 2 à 15 % en poids, de préférence 4 à 10 % en poids, en particulier de préférence 5 à 7 % en poids de plastifiant ;
(D) 0 à 5 % en poids d'additifs différents de (B) et (C),
où la somme de (A)-(D) est de 100 % en poids.

6. Tuyau en matière plastique selon la revendication 5, **caractérisée en ce que** le composant (A) est composé comme suit :
(A1) 50-90 % en poids, de préférence 60-72 % en poids de polyamide PA12 ; (A2) 10-50 % en poids, de préférence 28-40% en poids de polyamide PA612 ;
dans laquelle la somme (A1)-(A2) est égale à 100 % en poids du composant (A), et/ou ce composant (A) est constitué d'un mélange de polyamide PA12 et de polyamide PA612, le rapport étant compris entre 1:1 et 5:1, de manière particulièrement préférée entre 1,2:1 et 4:1.

7. Tuyau en matière plastique selon l'une des revendications précédentes, **caractérisé en ce que** la masse de moulage de la couche intermédiaire (4) est constituée des composants suivants :
(a) 60 à 92 % en poids, de préférence 70 à 90 ou 72 à 90 % en poids, d'un polyamide choisi dans le groupe suivant : PA612, PA616 ;
b) 5 à 25 %, de préférence 10 à 20 %, de préférence 12 à 18 % en poids de modificateur d'impact ;
(c) 3-18% en poids, de préférence 4-14% en poids, en particulier de préférence 7-11% en poids de plastifiant ;
(d) 0 à 5 % en poids d'additifs autres que ceux visés aux points b) et c),
où la somme de (a)-(d) est de 100 % en poids.

8. Tuyau en matière plastique selon l'une des revendications 5 à 7, **caractérisée en ce que** la proportion d'additifs (D,d) se situe dans la plage de 0,1 à 3 pour cent en poids, de préférence dans la plage de 0,5 à 1 pour cent en poids,
et/ou **en ce que** les additifs (D,d) sont choisis parmi au moins un additif du groupe suivant : antioxydants, auxiliaires technologiques, stabilisateurs UV, stabilisateurs thermiques, pigments, supports de mélanges-maîtres, additifs de conductivité, lubrifiants ou leurs mélanges.

9. Tuyau en matière plastique selon l'une des revendications 5-8 précédentes, **caractérisé en ce que** le modificateur d'impact (B,b) est un copolymère d'éthylène-a oléfine modifié par un acide, en particulier de préférence un copolymère d'éthylène/α-oléfine greffé par un anhydride d'acide, en particulier par l'anhydride maléique, en particulier un copolymère d'éthylène/butylène, d'éthylène/propylène ou d'éthylène/propylène/butylène ainsi modifié ou greffé, ainsi que leurs mélanges.

10. Tuyau en matière plastique selon l'une des revendications précédentes 5-9, **caractérisée en ce que** le plastifiant (C,c) est choisi comme plastifiant à base d'ester d'acide hydroxybenzoïque et/ou de sulfonamide, de préférence de la classe des plastifiants de sulfonamide N-substitués, en particulier de préférence comme BBSA.

11. Tuyau en matière plastique selon l'une des revendications précédentes, **caractérisée en ce qu'**au moins l'une des couches (3-5), de préférence toutes les couches, présentent une stabilisation au cuivre, de préférence à base de Cul, dans le cadre des additifs (D,d), dans une proportion de Cul comprise entre 0,01 et 0,10 % en poids, ou dans une proportion de 0,03 à 0,07 % en poids par rapport à la masse de moulage totale de la couche respective.

12. Tuyau en matière plastique selon l'une des revendications précédentes, **caractérisée en ce que** le polyamide ou les polyamides d'au moins une couche, de préférence le polyamide de toutes les couches (3-5), ont une viscosité relative en solution, mesurée dans le m-crésol selon la norme ISO 307 (2007) à une température de 20°C, dans la plage de 2,0-2,4, de préférence de 2,05-2,35.

13. Tuyau en matière plastique selon l'une des revendications précédentes, **caractérisé en ce que** le ou les polyamides d'au moins une couche ont un point de fusion dans la plage de 160-240°C ou 175-220°C, de préférence lorsqu'ils sont choisis comme polyamide PA12 un point de fusion dans la plage de 175-180°C et lorsqu'ils sont choisis comme polyamide PA 612 un point de fusion dans la plage de 210-215°C.

14. Procédé de fabrication d'un tuyau en matière plastique selon l'une des revendications précédentes, **caractérisé en ce que** les trois couches sont formées en un corps creux, en particulier de préférence en un tuyau ou une conduite ou un récipient, dans un processus continu et/ou discontinu, de préférence dans un procédé d'extrusion-soufflage, un procédé d'extrusion en tandem, un procédé de gainage ou un procédé de (co)extrusion.

15. L'utilisation d'un tuyau en matière plastique selon l'une des revendications précédentes comme conduite de pression, en particulier comme conduite d'air comprimé, de préférence dans le secteur automobile, en particulier de préférence comme conduite de frein à air comprimé dans le secteur automobile, de préférence dans des conditions de pression interne allant jusqu'à 100 bars, en particulier de préférence jusqu'à 90 bars, et de manière particulièrement préférée dans la plage 80 - 100 bars.
